# EUROPEAN PATENT SPECIFICATION

(11) **EP 3 070 878 B1**
(45) Date of publication and mention of the grant of the patent: **22.04.2020**
(21) Application number: 14860007.5
(22) Date of filing: 13.06.2014
(51) Int. Cl.: H04L 12/24, G06F 3/14

(54) **PERFORMANCE OBJECT AGGREGATION PATH INTERFACE DISPLAY METHOD AND APPARATUS IN INTEGRATED NETWORK MANAGEMENT**
VERFAHREN UND VORRICHTUNG ZUR ANZEIGE EINER LEISTUNGSOBJEKTAGGREGATIONSWEGSCHNITTSTELLE IN EINER INTEGRIERTEN NETZWERKVERWALTUNG
PROCÉDÉ ET APPAREIL D'AFFICHAGE D'INTERFACE DE CHEMIN D'AGRÉGATION D'OBJETS DE PERFORMANCE EN GESTION DE RÉSEAU INTÉGRÉE

(30) Priority: 11.11.2013 CN 201310558161
(43) Date of publication of application: 21.09.2016
(73) Proprietor: ZTE Corporation, Shenzhen, Guangdong 518057 (CN)
(72) Inventor: ZHANG, Dong, Shenzhen Guangdong 518057 (CN)
(74) Representative: Novagraaf Technologies
(86) International application number: PCT/CN2014/079886
(87) International publication number: WO 2015/067049

(56) References cited:
- WO-A1-2012/141732
- WO-A1-2012/141733
- WO-A1-2012/174882
- WO-A1-2013/028209
- CN-A- 101 018 235
- US-A1- 2012 259 851
- US-B1- 7 606 895

## Description

### Technical Field

The disclosure relates to the technical field of communications, especially to management of performance data of a network layer in integrated telecommunications network management, and particularly to a method and device for displaying a Performance Object (PO) aggregation path interface in integrated network management.

### Background

With the emergence of more and more full service operators, a telecommunications operation and maintenance mode is also evolving from the previous decentralized maintenance into centralized maintenance, and it is required by more and more market co-management demands (such as wireless co-management, wired co-management, and bearer network co-management), and cross-technology and cross-manufacturer network management demands that an Element Management System (EMS) is capable of unified cross-product management, and the market requires an integrated network management solution for users and services in the telecommunications field.

Integrated network management, which is an cross-manufacturer and cross-technology integrated Network Management System (NMS) for the users and the services in the telecommunications field, is on an NMS layer, while performance management is one of the core functions of the integrated network management.

Generally, a group of performance data reported by a lower level (such as an EMS and an Operation Maintenance Module (OMM)) is described by a PO in the integrated network management. In practical application, performance data reported by a lower level is usually device-grade data of original time granularity in an extremely large amount, thus telecommunications operation and maintenance personnel pay little attention to the data in normal conditions, and pay more attention to aggregated data with coarser granularity. Therefore, a process of aggregating data to coarser granularity during performance management is called aggregation. A model corresponding to PO aggregation includes a source PO and a target PO, and a PO includes different algorithms supported by index aggregation, such as summation, averaging and maximizing.

Generally, aggregation in a PO is provided with a time dimension and a resource dimension. The time dimension is specific granularity support, and supported granularity, which depends on a service of a special network, will not change, while the resource dimension is a dynamic dimension determined by a specific device and a specific service, wherein the resource is a generalized resource concept, and generally includes a device, a territory, a service and so on. There are various resource association relationships among different resources.

During an aggregation process, a new PO2 will be generated in PO1 aggregation of a time dimension or in PO1 aggregation of a resource dimension, aggregation may be performed again by using the new PO2 as an aggregation source to generate PO3, and aggregation may be performed again to finally obtain POn as long as there is a dimension of an upper level for a PO. There are various combination methods during the process of aggregating PO1 into POn, and during the aggregation process, PO1s having the same data source are aggregated by using different combination methods to finally obtain POns with different data through calculation. Therefore, a complete process of generating POn from the source PO1 is described as an aggregation path.

At present, no technique for describing, and displaying in a form of an interface, an aggregation path of a complete process of generating performance data into POn from PO1 is provided.

The document US 7606895 discloses method and apparatus for collecting network performance data; the document WO 2012/174882 discloses method and apparatus for outputting telecommunication network management performance data; the document US 2012/0259851 discloses aggregation of conversion paths utilizing user interaction grouping.

### Summary

A method and device for displaying a PO aggregation path interface in integrated network management are provided by embodiments of the disclosure, so as to at least provide a visual aggregation path displaying process for a user, so that the user can learn an aggregation process and view source information of the aggregation, thereby improving the friendliness of an aggregation path interface.

The disclosure applies the following technical solution to achieve the purpose of the disclosure.

A method for displaying a PO aggregation path interface in integrated network management, comprising:
configuring an aggregation path display interface object using a time dimension and a resource dimension as a coordinate system and an aggregation path construction policy library; and
acquiring aggregation path data by using at least one computer interface that is initialized to be capable of receiving PO aggregation path data, selecting a corresponding aggregation path construction policy from the aggregation path construction policy library according to the aggregation path data, performing an aggregation path constructing processing for current aggregation path data according to the aggregation path construction policy, and displaying a constructed aggregation path on the aggregation path display interface object.

Optionally, the aggregation path construction policy is configured with corresponding relationships between three types of information of PO data and a corresponding aggregation path construction method, wherein the three types of information of the PO data are time granularity information and resource granularity information of the PO data as well as a PO name of the PO data.

Optionally, the aggregation path construction comprises:
labeling a coordinate point, which is uniquely determined by the time granularity information and the resource granularity information of the PO data on the coordinate system of the aggregation path display interface object; and
drawing an aggregation path vector on the coordinate system of the aggregation path display interface object according to a last aggregation path node and a current aggregation path node.

Optionally, time granularity of the coordinate system becomes coarser on the time dimension.

Optionally, after performing an aggregation path constructing processing for the current aggregation path data on the aggregation path display interface object, the method further comprises:
acquiring a user view command, and displaying, according to the user view command, detailed information corresponding to the current aggregation path data on the aggregation path display interface object.

A device for displaying a PO aggregation path interface in integrated network management, comprising:
a first configuring module, configured to configure an aggregation path display interface object using a time dimension and a resource dimension as a coordinate system;
a second configuring module, configured to configure an aggregation path construction policy library;
a data acquiring module, configured to acquire aggregation path data by using at least one computer interface that is initialized to be capable of receiving PO aggregation path data;
an aggregation path processing module, configured to select a corresponding aggregation path construction policy from the aggregation path construction policy library according to the aggregation path data and perform an aggregation path constructing processing for current aggregation path data according to the aggregation path construction policy; and
a displaying module, configured to display a processing result acquired after the aggregation path is constructed for the current aggregation path data on the aggregation path display interface object.

Optionally, the aggregation path construction policy is configured with corresponding relationships between three types of information of PO data and a corresponding aggregation path construction method, wherein the three types of information of the PO data are time granularity information and resource granularity information of the PO data as well as a PO name of the PO data.

Optionally, the aggregation path processing module comprises:
a labeling module, configured to label a coordinate point, which is uniquely determined by the time granularity information and the resource granularity information of the PO data on the coordinate system of the aggregation path display interface object; and
a path drawing module, configured to draw an aggregation path vector on the coordinate system of the aggregation path display interface object according to a last aggregation path node and a current aggregation path node.

Optionally, time granularity of the coordinate system may become coarser on the time dimension.

Optionally, the device for displaying the PO aggregation path interface in the integrated network management further comprises:
a user command processing module, configured to acquire view command inputted by a user, and display, according to the view command, detailed information corresponding to the current aggregation path data on the aggregation path display interface object.

It can be learned from the technical solution of the disclosure that a method and device for displaying a PO aggregation path interface in integrated network management according to the disclosure apply a method based on mathematical coordinate axes or a rectangular plane coordinate system to display an aggregation path during a PO aggregation process. The interface display can clearly display an aggregation relationship between POs and enable a user to clearly learn an aggregation process. Besides, when an error occurs on aggregation data, the user can quickly find the error by means of the disclosure, to definitely trace, quickly locate, and analyze a problem.

### Brief Description of the Drawings

Fig. 1 is a flowchart of a method for displaying a PO aggregation path interface in integrated network management according to an embodiment of the disclosure;
Fig. 2 is a flowchart of a method for displaying a PO aggregation path interface in integrated network management according to another embodiment of the disclosure;
Fig. 3 is a structural diagram of a device for displaying a PO aggregation path interface in integrated network management according to an embodiment of the disclosure;
Fig. 4 is a structural diagram of an aggregation path processing module of a device for displaying a PO aggregation path interface in integrated network management according to an embodiment of the disclosure; and
Fig. 5 is a structural diagram of a device for displaying a PO aggregation path interface in integrated network management according to an embodiment of the disclosure.

Implementation of the purpose of the disclosure, and functional features and excellent effects of the disclosure will be further described hereinafter in combination with specific embodiments and accompanying drawings.

### Detailed Description of the Embodiments

The technical solution of the disclosure will be further expounded below in combination with the accompanying drawings and specific embodiments so that those skilled in the art may better understand and implement the disclosure. However, the disclosure is not limited by the listed embodiments.

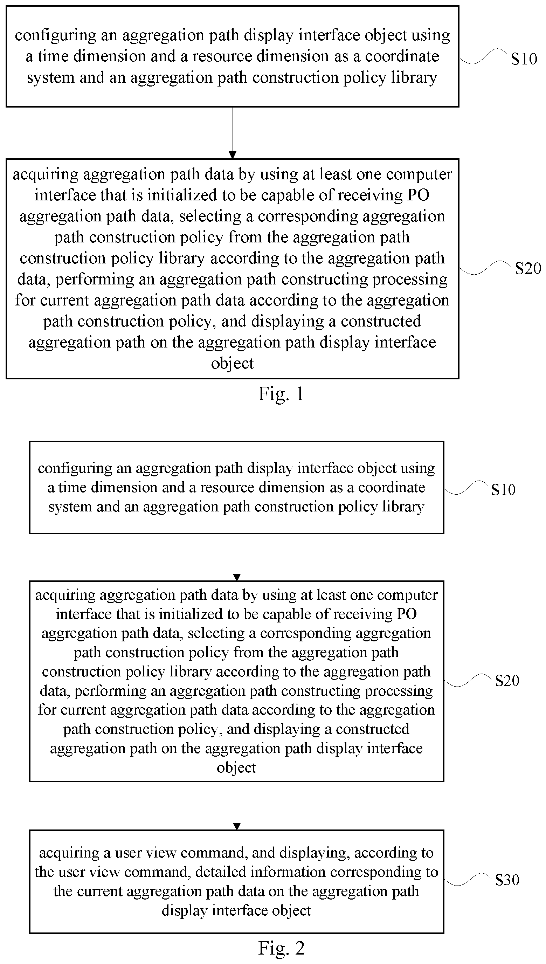

As shown in Fig. 1, an embodiment of the disclosure provides a method for displaying a PO aggregation path interface in integrated network management, including the following steps.

Step 10: Configuring an aggregation path display interface object using a time dimension and a resource dimension as a coordinate system and an aggregation path construction policy library.

Step 20: Acquiring aggregation path data by using at least one computer interface that is initialized to be capable of receiving PO aggregation path data, selecting a corresponding aggregation path construction policy from the aggregation path construction policy library according to the aggregation path data, performing an aggregation path constructing processing for current aggregation path data according to the aggregation path construction policy, and displaying a constructed aggregation path on the aggregation path display interface object.

In Step 10, the coordinate system displayed on the aggregation path display interface object may be a rectangular coordinate system. For example, the coordinate system uses aggregation path time granularity (the time dimension) as the abscissa axis, and resource granularity (the resource dimension) as the ordinate axis, and may use PO data of the first node in the aggregation path as the origin. If the aggregation path only includes data of a single dimension (e.g. only includes time granularity data or resource granularity data), an aggregation path of the data may be labeled and drawn only on a corresponding coordinate axis.

In the present embodiment, the aggregation path construction policy is configured with corresponding relationships between three types of information of PO data and a corresponding aggregation path construction method, wherein the three types of information of the PO data are time granularity information and resource granularity information of the PO data as well as a PO name of the PO data.

In the present embodiment, the aggregation path data acquired in Step 20 is arrays of POs according to a sequence of aggregation paths, and is usually returned to the aggregation path display interface object in a format of JavaScript Object Notation (JSON). A PO at least includes "gran" representing a time dimension, "resource" of a resource dimension and "name" for displaying. For example, an example of an array on the aggregation path is as follows:

```
 Data=
 [{"name":"1X Voice Call", "gran":"30m", "resource": "BTS"},
 [{"name":"1X Voice Call", "gran":"1H", "resource": "BTS"},
 [{"name":"1X Voice Call", "gran":"1H", "resource": "BSC"},
 [{"name":"1X Voice Call", "gran":"30m", "resource": "BTS"},
 [{"name":"1X Voice Call", "gran":"1H", "resource": "BTS"},
 [{"name":"1X Voice Call", "gran":"1H", "resource": "BSC"}
 ]
```

Aggregation of the PO includes two dimensions, a time dimension and a resource dimension, wherein system-supported time granularity is generally fixed. For example, a universal set of the time granularity is [1 minute, 5 minutes, 15 minutes, 30 minutes, 1 hour, day, week, month, year]. Time granularity of a PO corresponding to the first node on an aggregation path node in an aggregation path array is the smallest time granularity, and time granularity of the last PO is the largest time granularity. The time granularity of the coordinate system becomes coarser in the time dimension. In the present embodiment, the smallest granularity and the largest granularity, and all granularity therebetween in a universal granularity set are acquired as aggregation path display granularity. However, system-supported resource granularity is usually dynamic. Only a related resource participating in aggregation is displayed when the aggregation path is displayed. An array of the resource dimension may be acquired directly from the aggregation path data as an aggregation path display resource.

Step 20 may further include a step of judging whether the current aggregation path data is aggregated on a single dimension. If so, the data of the dimension is only identified by a horizontal number axis or a vertical number axis, and information display of the other dimension is added to the origin. If the data is aggregated in a compound manner, i.e. the data is PO data including data of time granularity and resource granularity at the same time, the aggregation path is drawn and displayed by using a starting resource of the aggregation path as the origin, and by representing the time granularity with the coordinate abscissa axis, and representing the resource dimension by the coordinate ordinate.

In Step 20, the aggregation path construction method preferably includes the following steps:
(1) a coordinate point, which is uniquely determined by the time granularity information and the resource granularity information of the PO data is labeled on the coordinate system of the aggregation path display interface object.
(2) and an aggregation path vector is drawn on the coordinate system of the aggregation path display interface object according to a last aggregation path node and a current aggregation path node.

After Step 20 is completed, different colors may be added to the aggregation path on the time granularity and the aggregation path on the resource granularity respectively for the aggregation path displayed on the aggregation path display interface object so that the time granularity and the resource dimension of corresponding coordinate points in the coordinate system may be located more intuitively. In the present embodiment, the coordinates of POs in the coordinate system may be also acquired in turn according to the data in the aggregation path, and display of model icons is added by using the coordinates as centers, and name display of corresponding POs are added on the model icon display, wherein a start node, an end node and an intermediate node of the aggregation path are distinguished by different icons, so as to improve the friendliness of the interface. Two adjacent values of the array in the aggregation path are used as a start point and an end point, so as to draw an aggregation path vector on the coordinate system of the aggregation path display interface object according to a last aggregation path node and a current aggregation path node.

Since planar display is simplified into a number axis method in an aggregation path of a single dimension, a display space may be limited. Therefore, names may be displayed alternatively so as to avoid name overlapping.

In a preferred embodiment, as shown in Fig. 2, after the aggregation path is constructed for the current aggregation path data on the aggregation path display interface object, the method for displaying the PO aggregation path interface in the integrated network management further comprises:
Step 30: Acquiring a user view command, and displaying, according to the user view command, detailed information corresponding to the current aggregation path data on the aggregation path display interface object.
wherein a function of clicking on a link with the left mouse button or acquiring a link with other methods may be added to POs besides the end point in the coordinate system. When a user wants to check detailed information of each PO of the aggregation path, the user may clicking the left mouse button on a position corresponding to a specific object on the coordinate system or use other command input methods to acquire a corresponding link, and display the detailed information of the node (PO), wherein the detailed information is commonly known by those skilled in the art and will not be expounded one by one here.

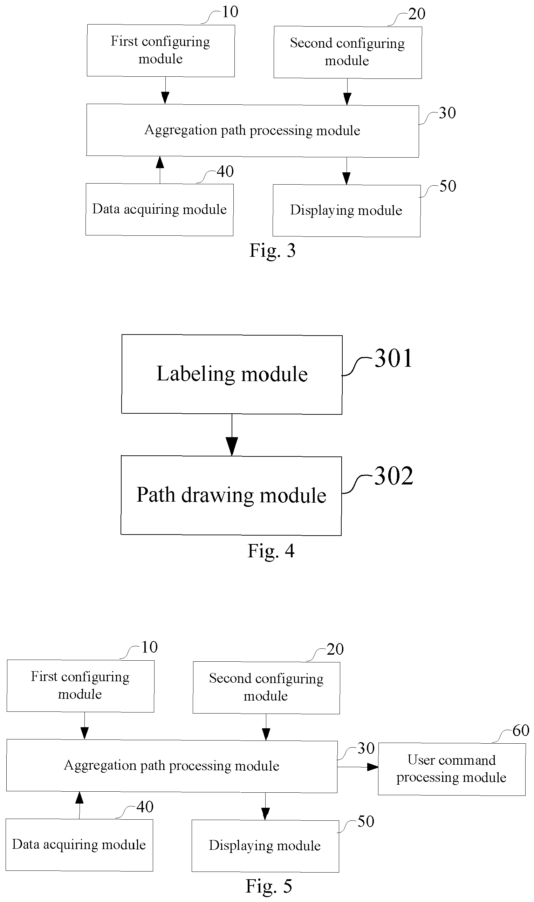

As shown in Fig. 3, an embodiment of the disclosure further provides a device for displaying a PO aggregation path interface in integrated network management, comprising:
a first configuring module 10, configured to configure an aggregation path display interface object using a time dimension and a resource dimension as a coordinate system;
a second configuring module 20, configured to configure an aggregation path construction policy library;
a data acquiring module 40, configured to acquire aggregation path data by using at least one computer interface that is initialized to be capable of receiving PO aggregation path data;
an aggregation path processing module 30, configured to select a corresponding aggregation path construction policy from the aggregation path construction policy library according to the aggregation path data and perform an aggregation path constructing processing for current aggregation path data according to the aggregation path construction policy; and
a displaying module 50, configured to display a processing result acquired after the aggregation path is constructed for the current aggregation path data on the aggregation path display interface object.

In the present embodiment, the aggregation path construction policy is configured with corresponding relationships between three types of information of PO data and a corresponding aggregation path construction method, wherein the three types of information of the PO data are time granularity information and resource granularity information of the PO data as well as a PO name of the PO data.

In the present embodiment, referring to Fig. 4, the aggregation path processing module 30 includes:
a labeling module 301, configured to label a coordinate point, which is uniquely determined by the time granularity information and the resource granularity information of the PO data on the coordinate system of the aggregation path display interface object; and
a path drawing module 302, configured to draw an aggregation path vector on the coordinate system of the aggregation path display interface object according to a last aggregation path node and a current aggregation path node.

In the present embodiment, time granularity of the coordinate system becomes coarser on the time dimension.

In the present embodiment, referring to Fig. 5, the device for displaying the PO aggregation path interface in the integrated network management further includes:
a user command processing module 60, configured to acquire view command inputted by a user, and display, according to the view command, detailed information corresponding to the current aggregation path data on the aggregation path display interface object.

### Industrial Applicability

As described above, a method and device for displaying a PO aggregation path interface in integrated network management according to the disclosure have the following beneficial effect: an aggregation relationship between POs is displayed clearly and a user is enabled to clearly learn an aggregation process. Besides, when an error occurs on aggregation data, the user can quickly find the error by means of the disclosure, to definitely trace, quickly locate, and analyze a problem.

## Claims

1. A method for displaying a Performance Object (PO) aggregation path interface in integrated network management, comprising:
configuring an aggregation path display interface object using a time dimension and a resource dimension as a coordinate system and an aggregation path construction policy library; and
acquiring aggregation path data by using at least one computer interface that is initialized to be capable of receiving PO aggregation path data, selecting a corresponding aggregation path construction policy from the aggregation path construction policy library according to the aggregation path data, performing an aggregation path constructing processing for current aggregation path data according to the aggregation path construction policy, and displaying a constructed aggregation path on the aggregation path display interface object.

2. The method for displaying the PO aggregation path interface in the integrated network management as claimed in claim 1, wherein the aggregation path construction policy is configured with corresponding relationships between three types of information of PO data and a corresponding aggregation path construction method, wherein the three types of information of the PO data are time granularity information and resource granularity information of the PO data as well as a PO name of the PO data.

3. The method for displaying the PO aggregation path interface in the integrated network management as claimed in claim 2, wherein the aggregation path construction method comprises:
labeling a coordinate point, which is uniquely determined by the time granularity information and the resource granularity information of the PO data, on the coordinate system of the aggregation path display interface object; and
drawing an aggregation path vector on the coordinate system of the aggregation path display interface object according to a last aggregation path node and a current aggregation path node.

4. The method for displaying the PO aggregation path interface in the integrated network management as claimed in claim 1, wherein time granularity of the coordinate system becomes coarser on the time dimension.

5. The method for displaying the PO aggregation path interface in the integrated network management as claimed in claim 1, wherein after performing an aggregation path constructing processing for the current aggregation path data on the aggregation path display interface object, the method further comprises:
acquiring a user view command, and displaying, according to the user view command, detailed information corresponding to the current aggregation path data on the aggregation path display interface object.

6. A device for displaying a Performance Object (PO) aggregation path interface in integrated network management, comprising:
a first configuring module, configured to configure an aggregation path display interface object using a time dimension and a resource dimension as a coordinate system;
a second configuring module, configured to configure an aggregation path construction policy library;
a data acquiring module, configured to acquire aggregation path data by using at least one computer interface that is initialized to be capable of receiving PO aggregation path data;
an aggregation path processing module, configured to select a corresponding aggregation path construction policy from the aggregation path construction policy library according to the aggregation path data and perform an aggregation path constructing processing for current aggregation path data according to the aggregation path construction policy; and
a displaying module, configured to display a processing result acquired after the aggregation path is constructed for the current aggregation path data on the aggregation path display interface object.

7. The device for displaying the PO aggregation path interface in the integrated network management as claimed in claim 6, wherein the aggregation path construction policy is configured with corresponding relationships between three types of information of PO data and a corresponding aggregation path construction method, wherein the three types of information of the PO data are time granularity information and resource granularity information of the PO data as well as a PO name of the PO data.

8. The device for displaying the PO aggregation path interface in the integrated network management as claimed in claim 6 or 7, wherein the aggregation path processing module comprises:
a labeling module, configured to label a coordinate point, which is uniquely determined by the time granularity information and the resource granularity information of the PO data on the coordinate system of the aggregation path display interface object; and
a path drawing module, configured to draw an aggregation path vector on the coordinate system of the aggregation path display interface object according to a last aggregation path node and a current aggregation path node.

9. The device for displaying the PO aggregation path interface in the integrated network management as claimed in claim 6, wherein time granularity of the coordinate system becomes coarser on the time dimension.

10. The device for displaying the PO aggregation path interface in the integrated network management as claimed in claim 6, wherein the device further comprises:
a user command processing module, configured to acquire view command inputted by a user, and display, according to the view command, detailed information corresponding to the current aggregation path data on the aggregation path display interface object.

## Patentansprüche

1. Verfahren zum Anzeigen einer Leistungsobjekt-(PO) Aggregationspfadschnittstelle in integriertem Netzwerkmanagement, umfassend:
Konfigurieren eines Aggregationspfad-Anzeigeschnittstellenobjekts unter Verwendung einer Zeitdimension und einer Ressourcendimension als ein Koordinatensystem, und einer Aggregationspfad-Aufbaurichtlinienbibliothek; und
Erfassen von Aggregationspfaddaten unter Verwendung von mindestens einer Computerschnittstelle, die so initialisiert wird, dass sie in der Lage ist, PO-Aggregationspfaddaten zu empfangen, gemäß den Aggregationspfaddaten eine entsprechende Aggregationspfad-Aufbaurichtlinie aus der Aggregationspfad-Aufbaurichtlinienbibliothek auszuwählen, gemäß der Aggregationspfad-Aufbaurichtlinie eine Aggregationspfad-Aufbauverarbeitung für aktuelle Aggregationspfaddaten durchzuführen, und einen aufgebauten Aggregationspfad auf dem Aggregationspfad-Anzeigeschnittstellenobjekt anzuzeigen.

2. Verfahren zum Anzeigen der PO-Aggregationspfadschnittstelle im integrierten Netzwerkmanagement nach Anspruch 1, wobei die Aggregationspfad-Aufbaurichtlinie mit entsprechenden Beziehungen zwischen drei Informationstypen von PO-Daten und einem entsprechenden Aggregationspfad-Aufbauverfahren konfiguriert wird, wobei es sich bei den drei Informationstypen der PO-Daten um Zeitgranularitätsinformationen und Ressourcengranularitätsinformationen der PO-Daten sowie einen PO-Namen der PO-Daten handelt.

3. Verfahren zum Anzeigen der PO-Aggregationspfadschnittstelle im integrierten Netzwerkmanagement nach Anspruch 2, wobei das Aggregationspfad-Aufbauverfahren umfasst:
Markieren eines Koordinatenpunkts, der durch die Zeitgranularitätsinformationen und die Ressourcengranularitätsinformationen der PO-Daten eindeutig bestimmt wird, im Koordinatensystem des Aggregationspfad-Anzeigeschnittstellenobjekts; und
Einzeichnen eines Aggregationspfadvektors gemäß einem letzten Aggregationspfadknoten und einem aktuellen Aggregationspfadknoten in das Koordinatensystem des Aggregationspfad-Anzeigeschnittstellenobjekts.

4. Verfahren zum Anzeigen der PO-Aggregationspfadschnittstelle im integrierten Netzwerkmanagement nach Anspruch 1, wobei Zeitgranularität des Koordinatensystems in der Zeitdimension gröber wird.

5. Verfahren zum Anzeigen der PO-Aggregationspfadschnittstelle im integrierten Netzwerkmanagement nach Anspruch 1, wobei nach dem Durchführen einer Aggregationspfad-Aufbauverarbeitung für die aktuellen Aggregationspfaddaten im Aggregationspfad-Anzeigeschnittstellenobjekt das Verfahren weiter umfasst:
Erfassen eines Benutzeransichtsbefehls und Anzeigen von detaillierten Informationen, die den aktuellen Aggregationspfaddaten entsprechen, gemäß dem Benutzeransichtsbefehl im Aggregationspfad-Anzeigeschnittstellenobjekt.

6. Vorrichtung zum Anzeigen einer Leistungsobjekt-(PO) Aggregationspfadschnittstelle in integriertem Netzwerkmanagement, umfassend:
ein erstes Konfigurationsmodul, das so konfiguriert ist, dass es ein Aggregationspfad-Anzeigeschnittstellenobjekt unter Verwendung einer Zeitdimension und einer Ressourcendimension als ein Koordinatensystem konfiguriert;
ein zweites Konfigurationsmodul, das so konfiguriert ist, dass es eine Aggregationspfad-Aufbaurichtlinienbibliothek konfiguriert;
ein Datenerfassungsmodul, das so konfiguriert ist, dass es Aggregationspfaddaten unter Verwendung von mindestens einer Computerschnittstelle erfasst, die so initialisiert wird, dass sie in der Lage ist, PO-Aggregationspfaddaten zu empfangen;
ein Aggregationspfad-Verarbeitungsmodul, das so konfiguriert ist, dass es gemäß den Aggregationspfaddaten eine entsprechende Aggregationspfad-Aufbaurichtlinie aus der Aggregationspfad-Aufbaurichtlinienbibliothek auswählt und gemäß der Aggregationspfad-Aufbaurichtlinie eine Aggregationspfad-Aufbauverarbeitung für aktuelle Aggregationspfaddaten durchführt; und
ein Anzeigemodul, das so konfiguriert ist, dass es ein Verarbeitungsergebnis, das erfasst wird, nachdem der Aggregationspfad für die aktuellen Aggregationspfaddaten aufgebaut ist, auf dem Aggregationspfad-Anzeigeschnittstellenobjekt anzeigt.

7. Vorrichtung zum Anzeigen der PO-Aggregationspfadschnittstelle im integrierten Netzwerkmanagement nach Anspruch 6, wobei die Aggregationspfad-Aufbaurichtlinie mit entsprechenden Beziehungen zwischen drei Informationstypen von PO-Daten und einem entsprechenden Aggregationspfad-Aufbauverfahren konfiguriert ist, wobei es sich bei den drei Informationstypen der PO-Daten um Zeitgranularitätsinformationen und Ressourcengranularitätsinformationen der PO-Daten sowie einen PO-Namen der PO-Daten handelt.

8. Vorrichtung zum Anzeigen der PO-Aggregationspfadschnittstelle im integrierten Netzwerkmanagement nach Anspruch 6 oder 7, wobei das Aggregationspfad-Verarbeitungsmodul umfasst:
ein Markierungsmodul, das so konfiguriert ist, dass es einen Koordinatenpunkt, der durch die Zeitgranularitätsinformationen und die Ressourcengranularitätsinformationen der PO-Daten eindeutig bestimmt wird, im Koordinatensystem des Aggregationspfad-Anzeigeschnittstellenobjekts markiert; und
ein Pfadeinzeichnungsmodul, das so konfiguriert ist, dass es einen Aggregationspfadvektor gemäß einem letzten Aggregationspfadknoten und einem aktuellen Aggregationspfadknoten in das Koordinatensystem des Aggregationspfad-Anzeigeschnittstellenobjekts einzeichnet.

9. Vorrichtung zum Anzeigen der PO-Aggregationspfadschnittstelle im integrierten Netzwerkmanagement nach Anspruch 6, wobei Zeitgranularität des Koordinatensystems in der Zeitdimension gröber wird.

10. Vorrichtung zum Anzeigen der PO-Aggregationspfadschnittstelle im integrierten Netzwerkmanagement nach Anspruch 6, wobei die Vorrichtung weiter umfasst:
ein Benutzerbefehls-Verarbeitungsmodul, das so konfiguriert ist, dass es einen von einem Benutzer eingegebenen Ansichtsbefehl erfasst, und gemäß dem Ansichtsbefehl detaillierte Informationen, die den aktuellen Aggregationspfaddaten entsprechen, im Aggregationspfad-Anzeigeschnittstellenobjekt anzeigt.

## Revendications

1. Procédé pour afficher une interface de chemin d'agrégation d'objet de performance (OP) en gestion de réseau intégrée, comprenant :
la configuration d'un objet d'interface d'affichage de chemin d'agrégation en utilisant une dimension temps et une dimension ressources comme système de coordonnées et d'une bibliothèque de politiques de construction de chemin d'agrégation ; et
l'acquisition de données de chemin d'agrégation en utilisant au moins une interface informatique qui est initialisée pour pouvoir recevoir des données de chemin d'agrégation d'OP, la sélection d'une politique de construction de chemin d'agrégation correspondante à partir de la bibliothèque de politiques de construction de chemin d'agrégation en fonction des données de chemin d'agrégation, la réalisation d'un traitement de construction de chemin d'agrégation pour les données de chemin d'agrégation courantes en fonction de la politique de construction de chemin d'agrégation, et l'affichage d'un chemin d'agrégation construit sur l'objet d'interface d'affichage de chemin d'agrégation.

2. Procédé pour afficher l'interface de chemin d'agrégation d'OP dans la gestion de réseau intégrée selon la revendication 1, dans lequel la politique de construction de chemin d'agrégation est configurée avec des relations correspondantes entre trois types d'informations de données d'OP et un procédé de construction de chemin d'agrégation correspondant, dans lequel les trois types d'informations des données d'OP sont des informations de granularité temporelle et des informations de granularité de ressources des données d'OP ainsi qu'un nom d'OP des données d'OP.

3. Procédé pour afficher l'interface de chemin d'agrégation d'OP dans la gestion de réseau intégrée selon la revendication 2, dans lequel le procédé de construction de chemin d'agrégation comprend :
le marquage d'un point de coordonnées, qui est uniquement déterminé par les informations de granularité temporelle et les informations de granularité de ressources des données d'OP, sur le système de coordonnées de l'objet d'interface d'affichage de chemin d'agrégation ; et
le traçage d'un vecteur de chemin d'agrégation sur le système de coordonnées de l'objet d'interface d'affichage de chemin d'agrégation en fonction d'un dernier nœud de chemin d'agrégation et d'un nœud de chemin d'agrégation courant.

4. Procédé pour afficher l'interface de chemin d'agrégation d'OP dans la gestion de réseau intégrée selon la revendication 1, dans lequel la granularité temporelle du système de coordonnées devient plus grossière sur la dimension temps.

5. Procédé pour afficher l'interface de chemin d'agrégation d'OP dans la gestion de réseau intégrée selon la revendication 1, dans lequel après réalisation d'un traitement de construction de chemin d'agrégation pour les données de chemin d'agrégation courantes sur l'objet d'interface d'affichage de chemin d'agrégation, le procédé comprend en outre :
l'acquisition d'une commande de vue utilisateur, et l'affichage, en fonction de la commande de vue utilisateur, d'informations détaillées correspondant aux données de chemin d'agrégation courantes sur l'objet d'interface d'affichage de chemin d'agrégation.

6. Dispositif pour afficher une interface de chemin d'agrégation d'objet de performance (OP) en gestion de réseau intégrée, comprenant :
un premier module de configuration, configuré pour configurer un objet d'interface d'affichage de chemin d'agrégation en utilisant une dimension temps et une dimension ressources comme système de coordonnées ;
un second module de configuration, configuré pour configurer une bibliothèque de politiques de construction de chemin d'agrégation ;
un module d'acquisition de données, configuré pour acquérir des données de chemin d'agrégation en utilisant au moins une interface informatique qui est initialisée pour pouvoir recevoir des données de chemin d'agrégation d'OP ;
un module de traitement de chemin d'agrégation, configuré pour sélectionner une politique de construction de chemin d'agrégation correspondante à partir de la bibliothèque de politiques de construction de chemins d'agrégation en fonction des données de chemin d'agrégation et réaliser un traitement de construction de chemin d'agrégation pour les données de chemin d'agrégation courantes en fonction de la politique de construction de chemin d'agrégation ; et
un module d'affichage, configuré pour afficher un résultat de traitement acquis après que le chemin d'agrégation est construit pour les données de chemin d'agrégation courantes sur l'objet d'interface d'affichage de chemin d'agrégation.

7. Dispositif pour afficher l'interface de chemin d'agrégation d'OP dans la gestion de réseau intégrée selon la revendication 6, dans lequel la politique de construction de chemin d'agrégation est configurée avec des relations correspondantes entre trois types d'informations de données d'OP et un procédé de construction de chemin d'agrégation correspondant, dans lequel les trois types d'informations des données d'OP sont des informations de granularité temporelle et des informations de granularité de ressources des données d'OP ainsi qu'un nom d'OP des données d'OP.

8. Dispositif pour afficher l'interface de chemin d'agrégation d'OP dans la gestion de réseau intégrée selon la revendication 6 ou 7, dans lequel le module de traitement de chemin d'agrégation comprend :
un module de marquage, configuré pour marquer un point de coordonnées, qui est déterminé uniquement par les informations de granularité temporelle et les informations de granularité de ressources des données d'OP sur le système de coordonnées de l'objet d'interface d'affichage de chemin d'agrégation ; et
un module de traçage de chemin, configuré pour tracer un vecteur de chemin d'agrégation sur le système de coordonnées de l'objet d'interface d'affichage de chemin d'agrégation en fonction d'un dernier nœud de chemin d'agrégation et d'un nœud de chemin d'agrégation courant.

9. Dispositif pour afficher l'interface de chemin d'agrégation d'OP dans la gestion de réseau intégrée selon la revendication 6, dans lequel la granularité temporelle du système de coordonnées devient plus grossière sur la dimension temps.

10. Dispositif pour afficher l'interface de chemin d'agrégation d'OP dans la gestion de réseau intégrée selon la revendication 6, dans lequel le dispositif comprend en outre :
un module de traitement de commande utilisateur, configuré pour acquérir une commande de vue entrée par un utilisateur, et afficher, en fonction de la commande de vue, des informations détaillées correspondant aux données de chemin d'agrégation courantes sur l'objet d'interface d'affichage de chemin d'agrégation.
